# EUROPEAN PATENT APPLICATION

(11) **EP 1 983 419 A2**
(43) Date of publication of application: **22.10.2008**
(21) Application number: 08251135.3
(22) Date of filing: 27.03.2008
(51) Int. Cl.: G06F 3/048

(54) **Method for managing user content in communication terminal**

(30) Priority: 16.04.2007 KR 20070036785
(71) Applicant: Samsung Electronics Co., Ltd, Yeongtong-gu Suwon-si, Gyeonggi-do (KR)
(72) Inventor: Kim, Jung Hun, Suwon-shi Gyeonggi-do (KR); Rhee, Young-Ho, Suwon-shi Gyeonggi-do (KR); Kim, Jae Hwan, Suwon-shi Gyeonggi-do (KR)
(74) Representative: Boakes, Jason Carrington

(57) **Abstract**

Provided is a method for managing user content in a communication terminal. The method includes if a user content item is generated, adding a content icon corresponding to the user content item to a content icon arrangement path on which content icons are arranged in an integrated manner in the order of time point of generation of the content icons; if a search for user content is performed, displaying the content icons arranged on the content icon arrangement path in a first display window located on a screen; and if a content icon is selected, displaying the user content item corresponding to the selected content icon in a second display window located on the same screen as the first display window.

## Description

### BACKGROUND OF THE INVENTION

### 1.Field of the Invention

The present invention relates to a method for managing user content in a communication terminal, and more particularly, to a method for managing user content that enables integrated searching of user content stored in a communication terminal.

### 2.Description of the Related Art

Communication terminals that have rapidly permeated into all aspects of our daily lives in recent years provide diverse additional functions as well as communication functions, i.e., a current communication terminal supports a number of diverse functions to meet changing user demands and store large amounts of information. Information stored in a communication terminal includes various kinds of user content that can be viewed as needed by a user.

However, in order to search for a user content item to be viewed in a communication terminal, a user of the communication terminal is required to enter into a menu classified by a category to which the user content item belongs. Further, because each menu contains user content items arranged in a list or grid, it is inconvenient for the user to select the desired user content item.

### SUMMARY OF THE INVENTION

In order to solve the above problems, the present invention provides a method for managing user content in a communication terminal that enables integrated searching for user content stored in the communication terminal.

The present invention also provides a method for managing user content in a communication terminal that enables a user to easily select user content requested by the user.

In accordance with an exemplary embodiment of the present invention, a method is provided for managing user content in a communication terminal, including if a user content item is generated, adding a content icon corresponding to the user content item to a content icon arrangement path on which content icons are arranged in an integrated manner in the order of time point of generation of the content icons; if a search for user content is performed, displaying the content icons arranged on the content icon arrangement path in a first display window located on a screen; and if a content icon is selected, displaying the user content item corresponding to the selected content icon in a second display window located on the same screen as the first display window.

In accordance with another exemplary embodiment of the present invention, a method is provided for managing user content stored in a communication terminal on a Personal Computer (PC), including if a user content item is generated on the communication terminal, adding a content icon corresponding to the user content item to a content icon arrangement path on which content icons are arranged in an integrated manner in the order of time point of generation of the content icons; if a search for user content is performed on the PC, receiving the content icons arranged on the content icon arrangement path from the communication terminal and displaying the received content icons in a first display window located on a screen of the PC; and if a content icon is selected on the PC, receiving the user content item corresponding to the selected content icon from the communication terminal and displaying the received user content item in a second display window located on the same screen of the PC as the first display window.

### BRIEF DESCRIPTION OF THE DRAWINGS

The objects, features and advantages of the present invention will be more apparent from the following detailed description in conjunction with the accompanying drawings, in which:
FIG. 1 is a schematic block diagram illustrating a configuration of a communication terminal according to an exemplary embodiment of the present invention;
FIG. 2 is a flowchart illustrating a method for managing user content in a communication terminal according to an exemplary embodiment of the present invention;
FIG. 3 is a flowchart illustrating a process of processing user content in the method of FIG. 2;
FIG. 4 is a flowchart illustrating a process of searching for user content in the method of FIG. 2;
FIG. 5 is a flowchart illustrating an operation of displaying user content in the process of FIG. 4;
FIG. 6 is a flowchart illustrating an operation of arranging content icons in the process of FIG. 4; and
FIGS. 7A-7I illustrate screen examples of a communication terminal displayed when performing the method of FIG. 2.

### DETAILED DESCRIPTION OF EXEMPLARY EMBODIMENTS

Hereinafter, exemplary embodiments of the present invention are described in detail with reference to the accompanying drawings.

In the exemplary embodiments described, the term "user content" refers to information that a user of a communication terminal can store, select, and view as needed. For example, the user content may be calls, messages, MPEG-1 Audio Layer 3 (MP3) files, images, and memos.

The term "generation time point" refers to a date and time point at which a user content item is generated on a communication terminal. For example, a generation time point may be the time point of a call origination and termination, a message transmission and reception, an MP3 file download, an image taking and reception, and a memo creation.

The term "content icon" refers to an image representing the details of a user content item. If the user content item includes an image or thumbnail, a content icon corresponding to the user content item may be the thumbnail or image set for a category to which the user content item belongs. For instance, if a user content item corresponding to a specific content icon is transmitted to or received from another party, the content icon may contain information about the other party such as a name, a phone number, and an e-mail address.

The term "content icon arrangement path" refers to a path wherein content icons are arranged in the order of time points at which the content icons are generated. The content icon arrangement path may be in the form of a rotatable wheel. The content icon arrangement path has the content icons arranged linearly. The content icon arrangement path also has dates at which the content icons are generated arranged at one side of the path, i.e., in the content icon arrangement path the content icons and the dates associated with the content icons are connected to each other. Thus, as the content icon arrangement path rotates, the content icons and their matching dates are connected to rotate together. Further, as the content icon arrangement path moves, a region on the content icon arrangement path to be displayed changes.

A "user content search screen" refers to a screen on which, upon receiving a search request from a user of a communication terminal, various data necessary to search for user content are displayed. The user content search screen includes a first display window for displaying content icons in the content icon arrangement path and a second display window for displaying, upon selection of a specific content icon in the first display window, a user content item corresponding to the selected content icon. The user content search screen may further include a third display window for displaying attributes of the user content item displayed in the second display window and a fourth display window for displaying conditional data used in arranging content icons on the content icon arrangement path.

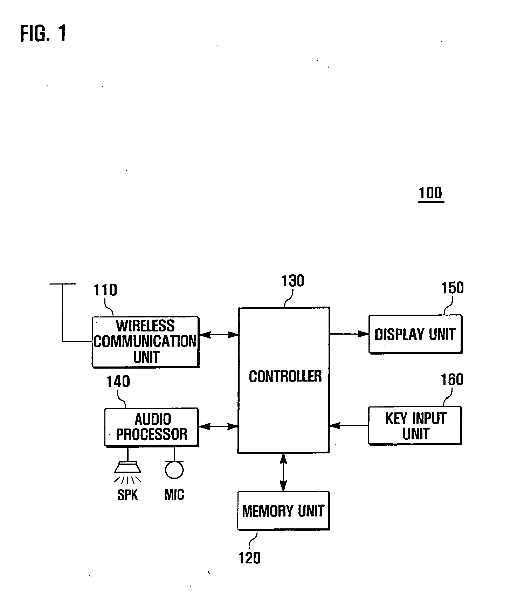

FIG. 1 is a schematic block diagram illustrating a configuration of a communication terminal 100 according to an exemplary embodiment of the present invention. It is assumed herein that the communication terminal 100 is a mobile telephone.
Referring to FIG. 1, the communication terminal 100 includes a wireless communication unit 110, a memory unit 120, a controller 130, an audio processor 140, a display unit 150, and a key input unit 160.

The wireless communication unit 110 performs wireless communications of the communication terminal 100. The wireless communication unit 110 includes a Radio Frequency (RF) transmitter that up-converts the frequency of a signal to be transmitted and amplifies the signal and an RF receiver that low-noise amplifies a received signal and down-converts its frequency.

The memory unit 120 includes a program memory and a data memory. The program memory stores programs for managing user content according to the present exemplary embodiment. The data memory stores data generated while executing the programs. In the present exemplary embodiment, the memory unit 120 stores user content that is generated on the communication terminal 100. The memory unit 120 also stores a content icon arrangement path with content icons corresponding to user content items arranged in the order in which the content icons are generated.

The controller 130 controls the overall operation of the communication terminal 100. The controller 130 includes a data processor (not shown) consisting of a transmitter that encodes and modulates a signal for transmission and a receiver that demodulates and decodes a received signal. In this case, the data processor may include a MOdulator/DEModulator (MODEM) and a COder/DECoder (CODEC). The codec includes a data codec for processing incoming data such as packet data and an audio codec for processing audio signals such as voice. In the present exemplary embodiment, the controller 130 also controls the memory unit 120 to store a user content item upon generation and creates a content icon corresponding to the content item, and adds the content icon to the content icon arrangement path. Further, the controller 130 controls the display unit 150 to display a user content search screen during a search for user content. In this case, the controller 130 controls data being displayed on the user content search screen according to a request from the user.

The audio processor 140 reproduces an audio signal output from an audio codec of the data processor through a speaker SPK, and outputs an audio signal that is input through a microphone MIC to the audio codec of the data processor.

The display unit 150 is controlled by the controller 130 to display the status of the communication terminal 100. The display unit 150 may be a Liquid Crystal Display (LCD). In this case, the display unit 150 may include an LCD controller, a memory for storing display data, and an LCD display element. If the LCD is implemented using a touch screen technology, the screen of the display unit 150 may function as an input portion. According to the present exemplary embodiment, the display unit 150 also displays the user content search screen during a search for user content.

The key input unit 160 includes keys for inputting numerals and characters and function keys for setting various functions.

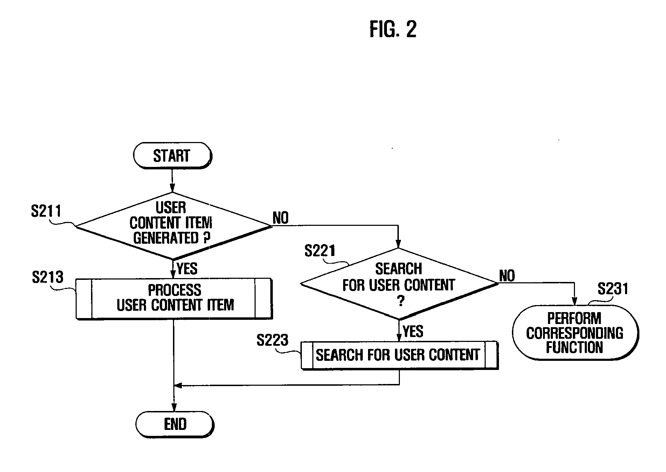

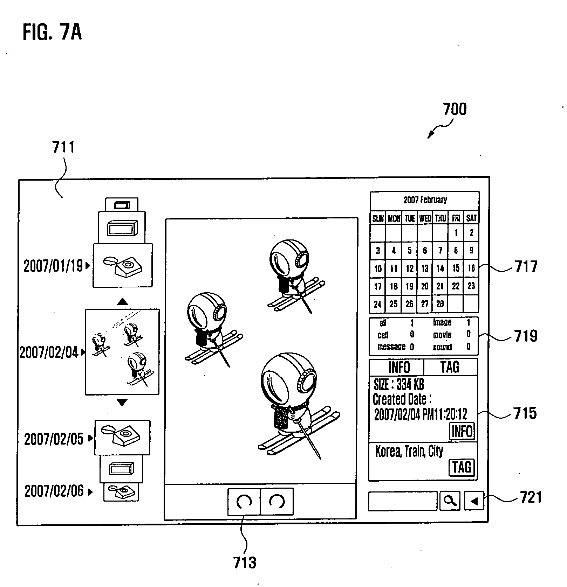

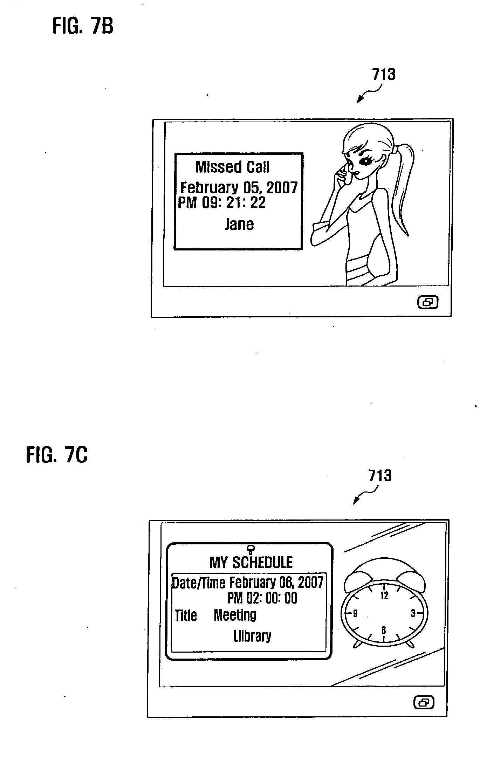

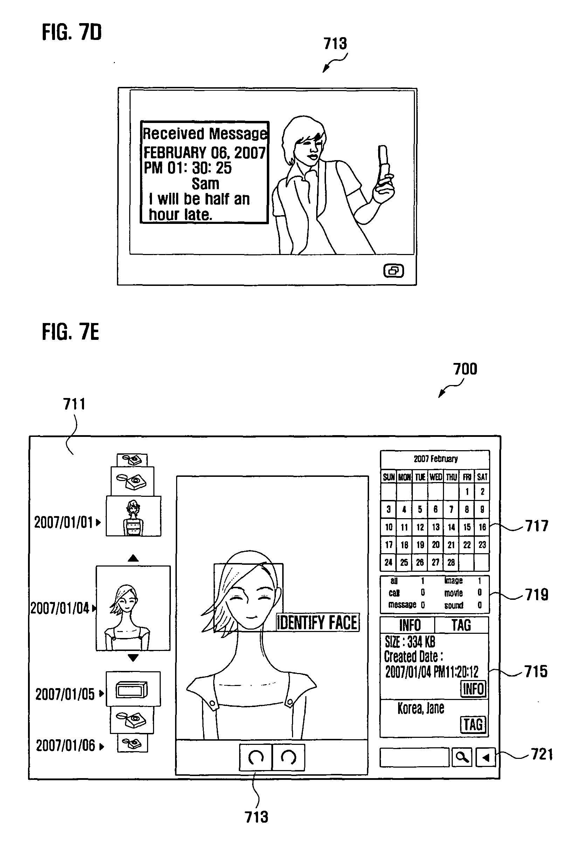

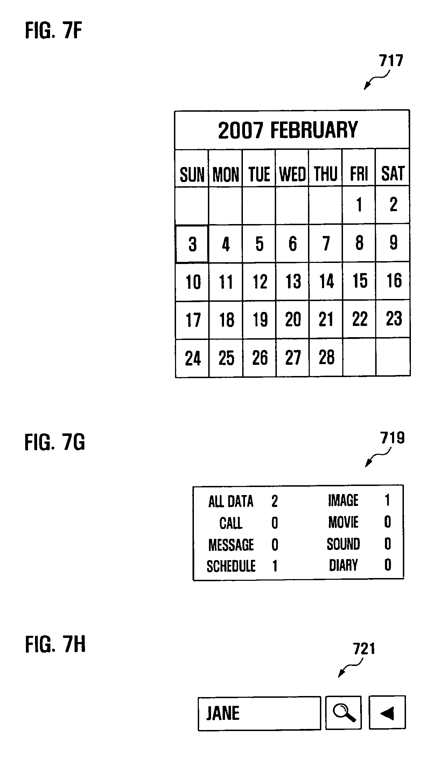

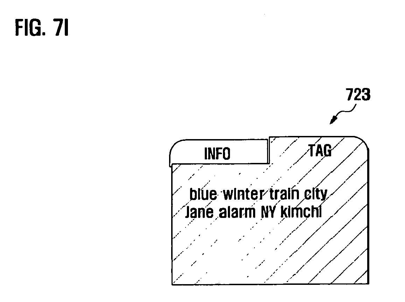

FIG. 2 is a flowchart illustrating a method for managing user content in a communication terminal according to an exemplary embodiment of the present invention. FIGS. 7A-7I illustrate screen examples of a communication terminal displayed when performing the method of FIG. 2. FIGS. 7A and 7E illustrate user content search screens. FIGS. 7B-7D illustrate screens on which user content items are displayed. FIG. 7F illustrates a calendar display region, and FIG.7G illustrates a category display region. FIG. 7H illustrates a search word input region, and FIG.7I illustrates a tag display region.

Referring to FIGS. 1 and 2, the controller 130 first determines whether a user content item is generated on the communication terminal 100,in step S211. If a content item is generated, the controller 130 processes the user content item, in step S213. The user content item may be any of a call, a message, an MP3 file, an image, and a memo. The user content item may be generated upon originating and terminating a call, transmitting and receiving a message, downloading an MP3 file, taking and receiving an image, and creating a memo.

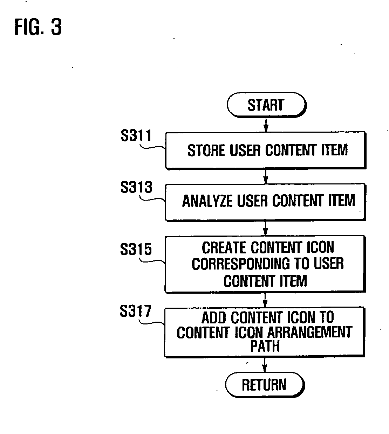

FIG. 3 is a flowchart illustrating step S213 of processing user content item in the method of FIG. 2 in detail.

Referring to FIG. 3, if generation of a user content item is detected, the controller 130 controls the memory unit 120 to store the generated user content item, in step S311. The controller 130 then analyzes the user content item, in step S313. In this case, the controller 130 determines a category to which the user content item belongs and a time point at which the user content item was generated. Using the result of the analysis, the controller 130 creates a content icon corresponding to the user content item, in step S315. In this case, if the user content item includes an image or thumbnail, the controller 130 may use the image or thumbnail as the content icon. The controller 130 may use an image set for the category to which the user content item belongs as the content icon. If the user content item is transmitted to or received from another party, the controller 130 controls the display unit 150 to display the content icon, which may contain information about the other party such as name, phone number, and e-mail address.

The controller 130 adds the content icon to a content icon arrangement path stored in the memory unit 120, in step S317, and then the process returns to FIG. 2. In this case, the content icon arrangement path includes a plurality of content icons corresponding to previously generated user content items arranged in the order of time point at which each of the content icons is generated. The content icon arrangement path may also include user content items belonging to a plurality of categories arranged in an integrated manner.

Returning to FIG. 2, if a user content item is not generated at step S211, the controller 130 determines whether a search request for user content is received, in step S221. If a search request for user content is received, the controller 130 performs a user content search function, in step S223. In this case, the controller 130 may perform a user content search function within a single screen, thus enabling the user of the communication terminal 100 to search user content items stored in the memory unit 120 in an integrated manner and to find a user content item that he/she desires to view.

If a search request for user content is not received at step S221, the controller 130 performs a corresponding function, in step S231.

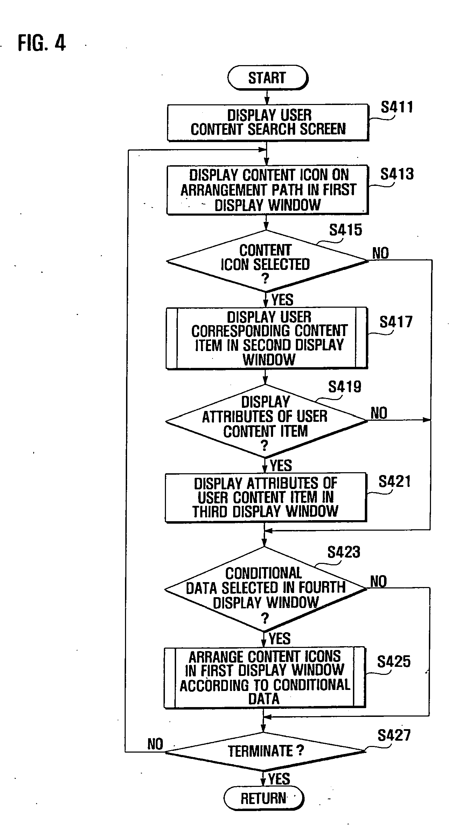

FIG. 4 is a flowchart illustrating step S223 of searching for user content in the method of FIG. 2 in detail.

Referring to FIG. 4, the controller 130 controls the display unit 150 to display a user content search screen 700, in step S411, as illustrated in FIG. 7A. The controller 130 controls the display unit 150 to display content icons arranged on the content icon arrangement path stored in the memory unit 120 in a first display window 711, in step S413. In this case, upon user request, the controller 130 can rotate the content icon arrangement path. More specifically, the controller 130 changes a region on the content icon arrangement path to be displayed in the first display window 711 by rotating the content icon arrangement path, on which content icons and corresponding dates at which the content icons are generated are connected to rotate together.

Thereafter, the controller 130 determines whether a specific content icon in the first display window 711 is selected, in step S415. If a specific content icon is selected, the controller 130 controls the display unit 150 to display a user content item corresponding to the selected content icon in a second display window 713, in step S417. In this case, the controller 130 may control the display unit 150 to temporarily display the second display window 713 on the entire screen according to a user request. If the selected user content item consists of a plurality of pages, the controller 130 may control the display unit 150 to temporarily display pages of the user content item in the second display window 713 in the form of a slide show according to a user request.

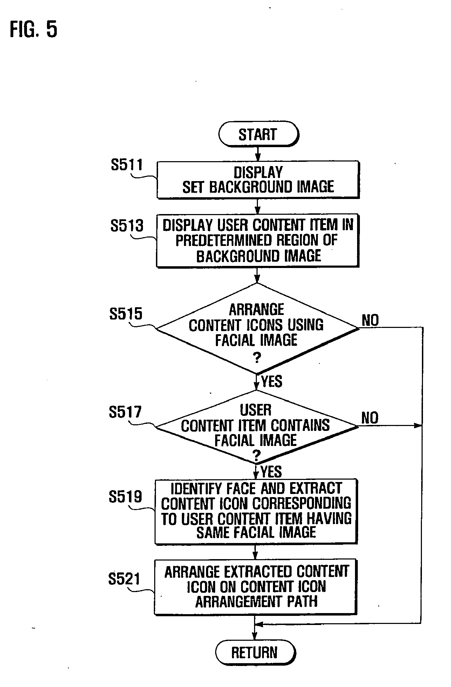

FIG. 5 is a flowchart illustrating step S417 of displaying a user content item in the process of FIG. 4 in detail.

Referring to FIG. 5, the controller 130 controls the display unit 150 to display a background image set according to the selected content icon in the second display window 713, in step S511, as illustrated in FIGS. 7B-7D. The background image may be set differently for each category to which a user content item belongs.

The controller 130 then controls the display unit 150 to display the user content item in a region of the background image, in step S513. For example, if the user content item corresponding to the selected content icon belongs to a 'unanswered call' category, the controller 130 may control the display unit 150 to display the user content item as illustrated in FIG. 7B. If the user content item corresponding to the selected content icon belongs to a 'schedule' category, the controller 130 may control the display unit 150 to display the user content item as illustrated in FIG. 7C. If the user content item corresponding to the selected content icon belongs to a 'received message' category, the controller 130 may control the display unit 150 to display the user content item as illustrated in FIG. 7D.

If a request is received to arrange the content icons in the first display window 711 using a facial image, when the user content item is displayed in the second display window 713, in step S515, the controller 130 determines whether the user content item displayed in the second display window 713 contains a facial image, in step S517. If the user content item in the second display window 713 is an image containing a facial image, for example as illustrated in FIG. 7E, the controller 130 identifies the facial image in the user content item and extracts a content icon corresponding to the user content item having the same facial image as the identified facial image, in step S519. Thereafter, the controller 130 arranges the extracted content icon on a content icon arrangement path, in step S521, and then the process returns to FIG. 4. Thus, the controller 130 can arrange the content icon corresponding to the user content item having the facial image on the content icon arrangement path.

If request to arrange the content icons in the first display window 711 using a facial image is not received at step S515 or if the user content displayed in the second display window 713 does not contain a facial image, the controller 130 continues to display the user content item in the second display window 713 and the process returns to FIG. 4.

Returning to FIG. 4, the controller 130 determines whether a request to display attributes of the user content item displayed in the second display window 713 is received, in step S419. The attributes of the user content item may include a capacity and a generation time point of the user content item. The attributes may further contain a tag assigned to the user content.

If a request to display the attributes of the user content item displayed in the second display window 713 is received, the controller 130 controls the display unit 150 to display the attributes of the user content item in a third display window 715, in step S421.

If conditional data is selected in a fourth display window, in step S423, the controller 130 arranges content icons in the first display window 711 according to the selected conditional data, in step S425. The fourth display window includes a calendar display region 717, a category display region 719, a search word input region 721, and a tag display region 723. The controller 130 may control the display unit 150 to display dates in the calendar display region 717 in different ways depending on the number of user content items corresponding to the date.

For instance, the controller 130 may control the display unit 150 to display each date in different colors or brightness levels corresponding to the number of user content items generated at the date. The controller 130 may also control the display unit 150 to display each category in the category display region 719 together with the number of user content items belonging to the category. Further, the controller 130 may control the display unit 150 to display each tag in the tag display region 723 in different ways depending on the number of content items containing the tag. For example, the controller 130 may control the display unit 150 to display tags in different sizes or colors corresponding to the number of user content items containing the tag i.e., the controller 130 arranges content icons according to conditional data selected using one of the calendar display region 717, the category display region 719, the search word input region 721, and the tag display region 723.

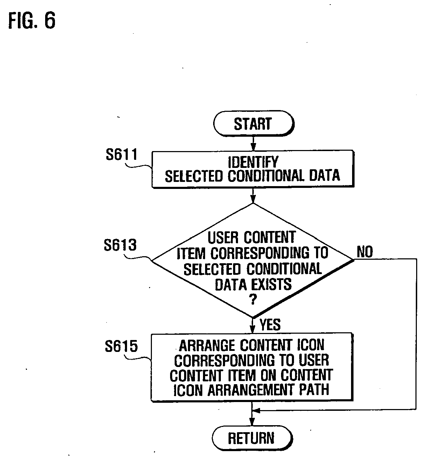

FIG. 6 is a flowchart illustrating step S425 of arranging content icons in the first display window 711 in the process of FIG. 4 in detail.

Referring to FIG. 6, the controller 130 identifies the selected conditional data, in step S611. Thereafter, the controller 130 determines whether a user content item corresponding to the selected conditional data exists in the memory unit 120, in step S613. For example, if a specific date is selected in the calendar display region 717 displayed as illustrated in FIG. 7F, the controller determines whether a user content item generated at the selected date exists in the memory unit 120. As another example, if a specific category is selected in the category display region 719 displayed as illustrated in FIG. 7G, the controller 130 determines whether a user content item belonging to the selected category exists in the memory unit 120. Categories of user content items refer to types of user content items and may include a call, a message, an image, an MP3 file, a schedule, and an alarm. As another example, if a search word is input in the search word input region 721 displayed as illustrated in FIG. 7H, the controller 130 checks whether a user content item containing detailed data corresponding to the input search word exists in the memory unit 120. As another example, if a specific tag is selected in the tag display region 723 displayed as illustrated in FIG. 7I, the controller 130 checks whether a user content item containing the selected tag exists in the memory unit 120.

If a user content item corresponding to the selected conditional data exists in the memory unit 120 at step S613, the controller 130 extracts a content icon corresponding to the user content item. The controller 130 then arranges the content icon on the content icon arrangement path, in step S615, and the process returns to FIG. 4. Thus, the controller 130 can arrange content icons corresponding to user content items that match specific conditional data on the content icon arrangement path.

Returning to FIG. 4, if a request to terminate the process of searching for user content is received, in step S427, the controller 130 terminates the process and returns to FIG. 2.

If request to terminate the process of searching for user content is not received at step S427, the controller 130 returns to step S413 and repeats the searching process until a termination request is received at step S427. While repeating steps S413 through S427, the controller 130 may change content icons on the content icon arrangement path displayed in the first display window 711 according to a request from the user of the communication terminal 100.

The exemplary embodiment of the present invention describes a method for managing user data in a communication terminal, wherein the user data is stored in the communication terminal, however the present invention can further be applied to managing user data on a Personal Computer (PC) connected to a communication terminal, wherein the user data is stored in the communication terminal. In this case, the communication terminal is connected to the PC via a wired or wireless connection.
In a method for managing user content according to another exemplary embodiment of the present invention, upon generation of a user content item in a communication terminal, a content icon corresponding to the user content item is created and arranged on a content icon arrangement path. Thereafter, if a request to search for user content is input in a PC connected to the communication terminal, a content icon on the content icon arrangement path is received from the communication terminal. The PC displays a user content search screen and content icons received from the communication terminal in a first display window. If a content icon is selected on the PC, the PC receives a user content item corresponding to the selected content icon from the communication terminal. Thereafter, the PC displays the received user content item in a second display window.

As described above, a method for managing user content in a communication terminal according to the present invention enables integrated searching for user content stored in the communication terminal through a user content search screen upon input of a search request for user content, i.e., the present invention eliminates an inconvenience of requiring a user to enter into a menu corresponding to a specific category to which user content belongs in order to search the communication terminal for user content. The present invention also enables content icons corresponding to specific conditional data to be arranged on a content icon arrangement path according to a user request, thus enabling the user of the communication terminal to easily select desired user content.

While the invention has been shown and described with reference to a certain preferred embodiment thereof, it will be understood by those skilled in the art that various changes in form and details may be made therein without departing from the spirit and scope of the invention as defined by the appended claims.

## Claims

1. A method for managing user content in a communication terminal, the method comprising:
if a user content item is generated, adding a content icon corresponding to the user content item to a content icon arrangement path on which content icons are arranged in an integrated manner in an order of time points of generation of the content icons;
if a search for user content is performed, displaying the content icons arranged on the content icon arrangement path in a first display window located on a screen; and
if a content icon is selected, displaying a user content item corresponding to the selected content icon in a second display window located on the same screen as the first display window.

2. The method of claim 1, wherein displaying the user content item comprises:
displaying a background image corresponding to the selected content icon in the second display window; and
displaying the user content item in a predetermined region of the background image.

3. The method of claim 2, wherein displaying the content icons further comprises displaying dates at which the content icons are generated at one side of the content icon arrangement path.

4. The method of claim 3, wherein the content icon arrangement path is displayed in a form of a rotatable wheel.

5. The method of claim 4, wherein the displayed content icons are linked to the corresponding generation dates of the content icons to rotate together upon receiving a request to rotate the content icon arrangement path.

6. The method of claim 1, further comprising displaying attributes of the user content item corresponding to the selected content icon in a third display window located on the same screen as the first and second display windows.

7. The method of claim 1, further comprising:
displaying conditional data in a fourth display window located on the same screen as the first and second display windows, wherein the conditional data is used for arranging the content icons on the content icon arrangement path; and
if a conditional data is selected, arranging the content icons according to the selected conditional data.

8. The method of claim 7, wherein the conditional data are dates at which each user content item is generated, and
wherein the fourth display window has a calendar display region for displaying months and corresponding dates.

9. The method of claim 8, wherein each date is displayed in the calendar display region in a manner preset to correspond to a number of user content items generated at the date.

10. The method of claim 7, wherein the conditional data are categories to which user content items belong, and wherein the fourth display window has a category display region for displaying a list of categories.

11. The method of claim 10, wherein the category display region further displays a number of user content items for each category.

12. The method of claim 7, wherein the conditional data are tags assigned to user content items, and
wherein the fourth display window has a tag display region for displaying the tags.

13. The method of claim 12, wherein each tag is displayed in the tag display region in a manner preset to correspond to a number of user content items to which the tag is assigned.

14. The method of claim 7, wherein the conditional data is a search word input to the communication terminal, and
wherein the fourth display window has a search word input region.

15. The method of claim 1, further comprising:
if the user content item corresponding to the selected content icon contains a facial image, identifying the facial image; and
arranging the content icon corresponding to the user content item containing the facial image on the content icon arrangement path on the first display window.

16. A method for managing user content stored in a communication terminal on a Personal Computer (PC), the method comprising:
if a user content item is generated on the communication terminal, adding a content icon corresponding to the user content item to a content icon arrangement path on which content icons are arranged in an integrated manner in an order of time points of generation of the content icons;
if a search for user content is performed on the PC, receiving the content icons arranged on the content icon arrangement path from the communication terminal and displaying the received content icons in a first display window located on a screen of the PC; and
if a content icon is selected on the PC, receiving a user content item corresponding to the selected content icon from the communication terminal and displaying the received user content item in a second display window located on the same screen of the PC as the first display window.

17. The method of claim 16, wherein displaying the user content item comprises:
displaying a background image corresponding to the selected content icon in the second display window; and
displaying the received user content item in a predetermined region of the background image.

18. The method of claim 17, wherein displaying the content icons further comprises displaying dates at which the content icons are generated at one side of the content icon arrangement path.

19. The method of claim 18, wherein the content icon arrangement path is displayed in a form of a rotatable wheel.

20. The method of claim 19, wherein the displayed content icons are linked to corresponding generation dates of the content icons to rotate together upon receiving a request from the PC to rotate the content icon arrangement path.

21. The method of claim 16, further comprising displaying attributes of the user content item corresponding to the selected content icon in a third display window located on the same screen of the PC as the first and second display windows.

22. The method of claim 16, further comprising:
displaying conditional data in a fourth display window located on the same screen of the PC as the first and second display windows, wherein the conditional data is used for arranging the content icons on the content icon arrangement path; and
if a conditional data is selected, arranging the content icons according to the selected conditional data.

23. The method of claim 22, wherein the conditional data are dates at which each user content item is generated, and wherein the fourth display window has a calendar display region for displaying months and corresponding dates.

24. The method of claim 23, wherein each date is displayed in the calendar display region in a manner preset to correspond to a number of user content items generated at the date.

25. The method of claim 22, wherein the conditional data are categories to which user content items belong, and wherein the fourth display window has a category display region for displaying a list of categories.

26. The method of claim 25, wherein the category display region further displays a number of user content items for each category.

27. The method of claim 22, wherein the conditional data are tags assigned to user content items, and wherein the fourth display window has a tag display region for displaying the tags.

28. The method of claim 27, wherein each tag is displayed in the tag display region in a manner preset to correspond to a number of user content items to which the tag is assigned.

29. The method of claim 22, wherein the conditional data is a search word input to the PC, and wherein the fourth display window has a search word input region.

30. The method of claim 16, further comprising:
if the user content item corresponding to the selected content item contains a facial image, identifying the facial image on the PC and transmitting the identified facial image to the communication terminal;
and extracting the content icon corresponding to the user content item having the facial image in the communication terminal and arranging the extracted content icon on the content icon arrangement path on the first display window.
